# DEMANDE DE BREVET EUROPEEN

(11) **EP 1 512 569 A1**
(43) Date de publication de la demande: **09.03.2005**
(21) Numéro de dépôt: 04300551.1
(22) Date de dépôt: 23.08.2004
(51) Int. Cl.: B60J 7/20, B60J 7/14

(54) **Coupé-cabriolet**

(30) Priorité: 02.09.2003 FR 0350490
(71) Demandeur: Renault s.a.s., 92100 Boulogne Billancourt (FR)
(72) Inventeur: Vasseur, Patrice, 75007, PARIS (FR)

(57) **Abrégé**

Un toit amovible pour transformer un coupé en cabriolet comprend une portion antérieure (12) et une postérieure (11), celle-là étant elle-même divisée en deux morceaux (9 et 10) dépendant d'un même mécanisme de rangement (13). Les éléments du toit sont rangés en étant superposés dans le coffre (3) sans occuper une grande surface horizontale, mais représentent une surface assez importante en étant montés ce qui rend le système attrayant pour des véhicules de longueurs usuelles.

## Description

Le sujet de cette invention concerne un véhicule automobile transformable de coupé en cabriolet, comprenant des éléments de toit amovibles qu'on peut ranger dans un coffre arrière.

Les toits considérés ici sont rigides et reliés au châssis par des mécanismes qui imposent leurs mouvements entre les positions de montage et de rangement dans le coffre. Un toit rigide peut en effet être préféré aux capotes en toile d'emploi très fréquent, et un mécanisme reliant en permanence le toit au châssis facilite le montage et le rangement tout en offrant une stabilité plus grande quand le toit est monté. Une telle conception est problématique avec un véhicule dont l'habitacle a une longueur ordinaire en raison du volume qu'il convient de donner au coffre pour qu'il contienne le toit au rangement : un coffre arrière de longueur excessive serait disgracieux sur un cabriolet. On devrait donc se résigner à limiter cette conception à des véhicules sans places à l'arrière, ou éventuellement n'offrant qu'un volume très réduit à l'arrière et l'inconfort correspondant aux passagers.

La présente invention concerne un véhicule automobile muni d'un toit amovible de ce genre, mais qui possède des caractéristiques permettant d'obvier aux inconvénients mentionnés. Le toit comprend tout d'abord deux portions indépendantes reliées au châssis par des mécanismes respectifs. Les portions du toit peuvent être rangées séparément dans le coffre en les superposant de sorte qu'elles n'occupent qu'une surface réduite. Il est possible d'ailleurs de n'en ranger qu'une seule, l'autre restant montée, pour donner un aspect plus original au véhicule selon la fantaisie du propriétaire.

La portion antérieure du toit comprend avantageusement deux éléments - portion extrême antérieure et portion centrale - qui sont reliés indépendamment au même mécanisme de montage : ces éléments peuvent eux-mêmes se retrouver à un état superposé au rangement dans le coffre, encore afin de limiter la surface occupée par le toit à l'état de rangement tout en permettant de couvrir un habitacle assez long à l'état de montage du toit. Cela peut être obtenu de façon très commode si le mécanisme comprend deux bielles articulées en parallélogramme au châssis et à la portion extrême antérieure du toit, la portion centrale du toit étant fixée à l'une desdites bielles.

Les bielles s'étendent avantageusement, à un état de montage du toit, derrière l'encadrement postérieur des vitres latérales, où elles sont cachées par la portion postérieure du toit quand elle est montée.

Le rangement de la portion postérieure est facilité si celle-ci ne subit pas de basculement, ce qui conduit à la monter sur un mécanisme à deux bielles encore articulées en parallélogramme au châssis et à un support de ladite portion postérieure. Cependant, un basculement de la portion postérieure peut être indiqué ou nécessaire pour permettre le rangement de la portion antérieure sous la portion postérieure : celle-ci est alors éventuellement montée sur le support par une articulation qui permet de la dégager temporairement.

L'invention sera maintenant décrite en liaison aux figures 1 à 7 qui représentent le véhicule conforme à l'invention et divers états du toit, comprenant les états de montage, de rangement et des états intermédiaires. La figure 1 représente l'état fermé, les figures 2, 3, 4 et 5 certains états dans le procédé de rangement, et les figures 6 et 7 deux états particuliers où le toit reste partiellement ouvert.

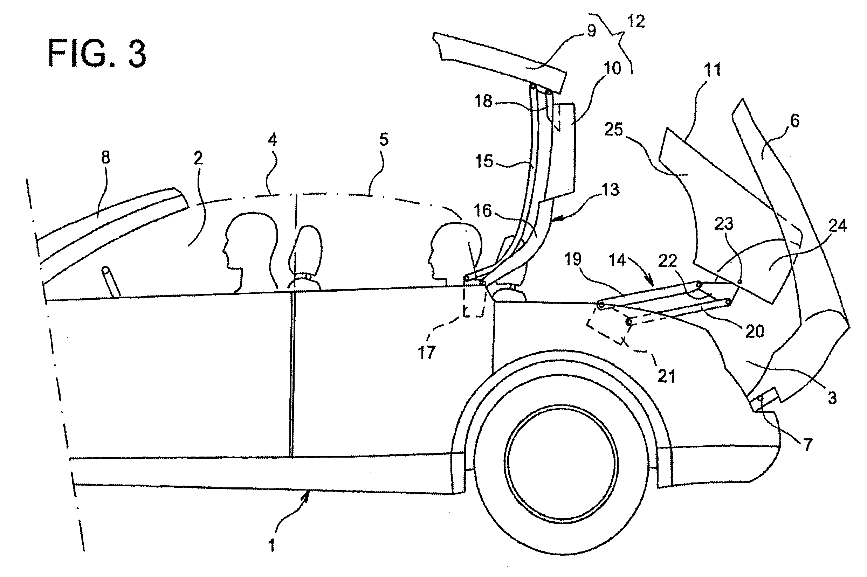

La description statique est plus commode à suivre sur la figure 3. Le véhicule comprend un châssis 1 qui délimite en particulier un habitacle 2 et un coffre 3 arrière de longueur modérée. L'habitacle 2 comprend deux rangées de sièges successives ayant toutes une profondeur suffisant au confort des passagers ; des vitres avant 4 et arrière 5 délimitent aussi l'habitacle ; le coffre 3 arrière se ferme par une porte 6 articulée au châssis 1 par un bord arrière inférieur 7, ce qui la fait basculer vers l'arrière pour ouvrir le coffre 3.

Les articulations qui seront mentionnées dans ce texte auront toutes un axe transversal au châssis 1 afin de permettre des mouvements en direction longitudinale des éléments qu'elles soutiennent.

Le véhicule comprend un toit composé d'une portion extrême antérieure 9, d'une portion centrale 10 et d'une portion postérieure 11. Les portions 9, 10 et 11 sont jointives entre elles et s'étendent au-dessus de l'habitacle depuis un pare brise 8 jusqu'au voisinage du coffre 3 arrière. La portion extrême antérieure 9 et la portion centrale 10 composent une portion antérieure 12 qu'un mécanisme 13 antérieur soutient ; de même, un mécanisme 14 postérieur, associé à la portion postérieure 11 du toit, soutient cette dernière.

Le mécanisme 13 comprend une bielle avant 15 et une bielle arrière 16 toutes deux articulées à une plaquette de support 17 appartenant au châssis 1. A l'état de montage du toit, les bielles 15 et 16 sont proches l'une de l'autre et s'étendent vers l'avant de la plaquette de support 17 tout en comprenant une partie incurvée qui suit l'encadrement de la vitre arrière 5. Les bielles 15 et 16 aboutissent à une plaquette de support 18 à l'arrière de la portion extrême antérieure 9 ; la portion centrale 10 est fixée rigidement à la bielle 16 arrière.

L'autre mécanisme 14 comprend aussi une bielle avant 19 et une bielle arrière 20 articulées entre, une plaquette de support 21 appartenant au châssis 1 et une plaquette 2 de support 22 de la portion postérieure 11. La plaquette de support 22 ne soutient cependant la portion postérieure 11 que par l'intermédiaire d'un axe d'articulation 23.

Les plaquettes de support 17 et 21 sont situées respectivement à l'arrière de l'habitacle 2 et à mi-longueur du coffre 3 arrière; à l'état de montage, les bielles 15, 16, 19 et 20 sont toutes dirigées vers l'avant à partir des plaquettes 19 et 21 avec une inclinaison modérée. Les portions 9, 10 et 11 du toit se joignent entre elles, au pare-brise 8 et à la carrosserie du véhicule à l'arrière de l'habitacle 2 ; la portion postérieure 11 porte une lunette arrière 24 usuelle et une portion d'encadrement 25 de l'arrière des vitres latérales 5 ; la portion centrale 10 s'étend sensiblement sur l'avant des vitres arrière 5, et la portion extrême antérieure 9 sur la plus grande partie des vitres avant 4.

Les mécanismes 13 et 14 peuvent se trouver de chaque côté du véhicule ou d'un côté seulement si cela est possible ; ils peuvent être commandés à la main ou par des vérins non représentés.

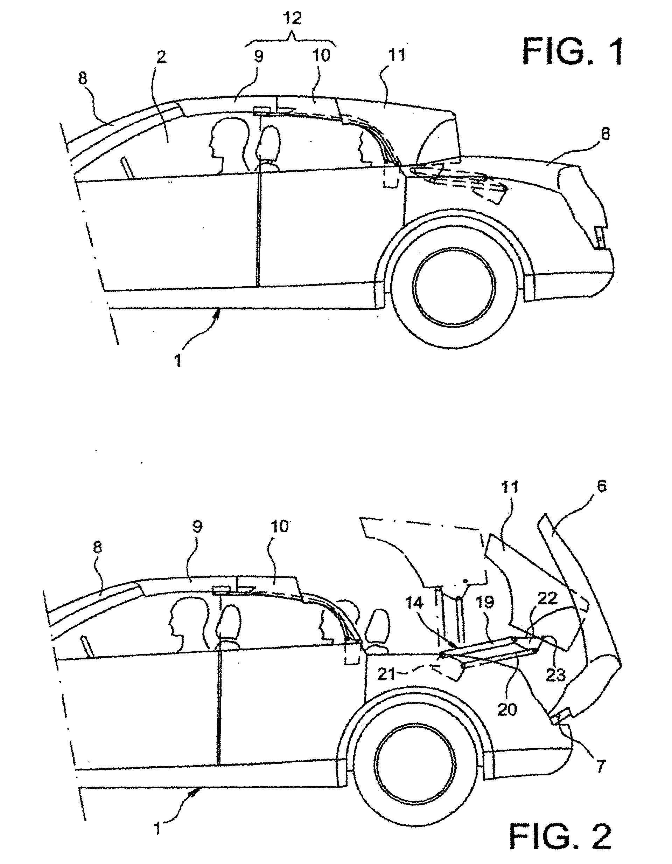

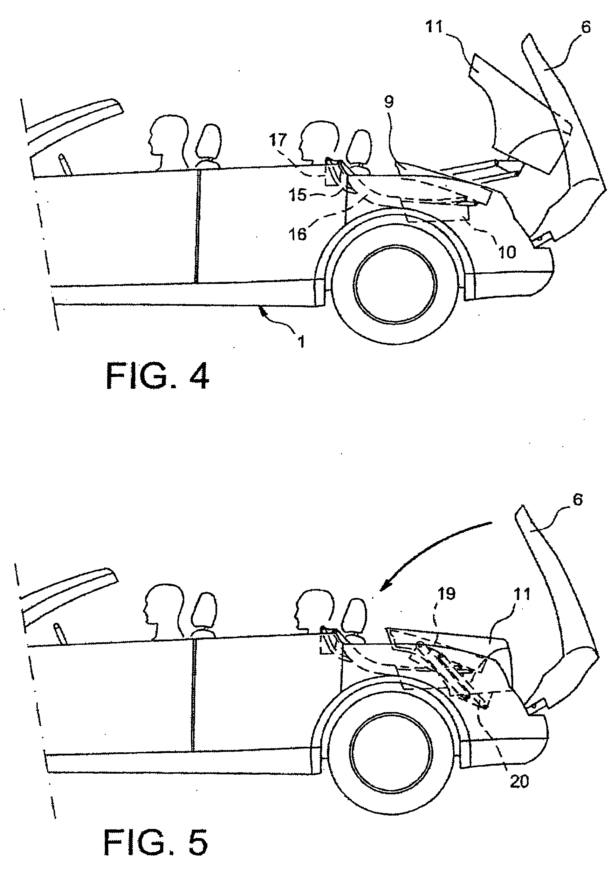

On se rapportera à toutes les figures pour une compréhension plus immédiate de la cinématique d'ouverture du toit menant à l'état de rangement. Le départ correspond à l'état de fermeture du toit illustré à la figure 1. Une fois la porte 6 du coffre 3 ouverte, la portion postérieure 11 du toit est retirée, faisant basculer les bielles 19 et 20 du mécanisme 14 associé, puis la portion antérieure 12 est retirée en faisant basculer les bielles 15 et 16 du mécanisme 13 vers l'arrière (figure 2). Les portions extrêmes antérieure 9 et centrale 10 se replient en formant un angle (figure 3) et se superposent bien quand les bielles 15 et 16 ont fait sensiblement un demi-tour, puisque la portion centrale 10 est fixée à la bielle 16 mais que la portion extrême antérieure 9 ne change pas d'orientation grâce au montage en parallélogramme. Quand la superposition est atteinte (figure 4), les portions 9 et 10 se trouvent dans le coffre arrière 3 après avoir passé par-dessous la portion postérieure 11, qu'on a légèrement relevée en la basculant autour de l'axe d'articulation 23. La fin de la manoeuvre de rangement consiste à remettre la portion postérieure 11 à son orientation d'origine puis à la faire descendre dans le coffre arrière 3 en complétant la rotation des bielles 19 et 20 du mécanisme 14 (figure 5). La portion postérieure 11 finit par se superposer aux portions 9 et 10. L'ensemble n'occupe qu'un volume réduit grâce à la superposition, à la division de la portion antérieure 12 en deux morceaux et à l'orientation favorable de la portion postérieure 11, couvrant les portions 9 et 10 en haut et sur les côtés avec peu de jeu dont la partie, la plus encombrante, reste à l'arrière du coffre 3, dans sa partie la plus large ; que ne limitent pas les roues arrières.

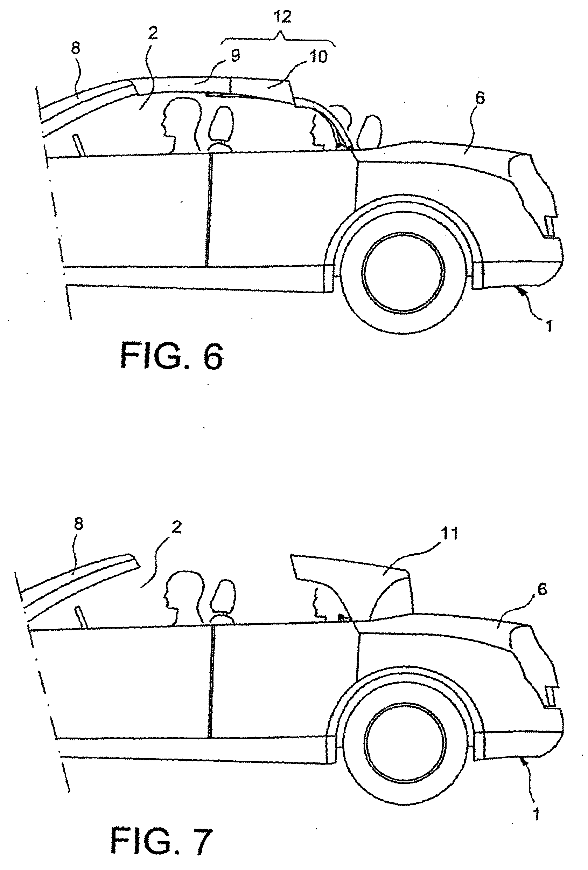

Les situations où la portion postérieure 11 et la portion antérieure 12 sont sorties séparément, l'autre des portions étant rangée, sont représentées sur deux vues particulières aux figures 6 et 7. Il est facile de les atteindre, les mécanismes 13 et 14 étant indépendants et toute collision entre les parties de toit étant évitée.

## Revendications

1. Véhicule automobile comprenant un châssis (1), un coffre (3) arrière et une toit amovible, **caractérisé en ce que** le toit comprend deux portions (11, 12) reliées au châssis par des mécanismes (13, 14) de montage respectifs associés permettant de déplacer les portions ver le coffre arrière de façon réversible et indépendante, une des portions étant une portion postérieure (11) comprenant une lunette arrière et un encadrement postérieur de vitres latérales (5), une autre des portions étant une portion antérieure (12) s'étendant entre un pare-brise (8) et la portion postérieure (11).

2. Véhicule automobile selon la revendication 1, **caractérisé en ce que** la portion antérieure comprend une portion extrême antérieure (9) du toit et une portion centrale (10) du toit, qui sont reliées indépendamment au mécanisme (13) de montage associé.

3. véhicule automobile selon la revendication 2, **caractérisé en ce que** le mécanisme associé à la portion antérieure comprend deux bielles (15, 16) articulées en parallélogramme au châssis (1) et à la portion extrême antérieure (9) , la portion centrale (10) étant fixée à l'une desdites bielles (16).

4. Véhicule automobile selon la revendication 3, **caractérisé en ce que** les bielles s'étendent, à un état de montage du toit, derrière l'encadrement postérieur des vitres latérales (5).

5. Véhicule automobile selon l'une quelconque des revendications précédentes, **caractérisé en ce que** le mécanisme (14) associé à la portion postérieure (11) comprend deux bielles (19, 20) articulées en parallélogramme au châssis (1) et à un support (22) de la portion postérieure.

6. Véhicule automobile selon la revendication 5, **caractérisé en ce que** la portion postérieure (11) est montée sur le support (22) par une articulation transversale (23).

7. Véhicule automobile selon la revendication 2, **caractérisé en ce qu'**il comprend deux rangées de sièges.
